# EUROPEAN PATENT SPECIFICATION

(11) **EP 1 535 054 B1**
(45) Date of publication and mention of the grant of the patent: **11.04.2007**
(21) Application number: 03794349.5
(22) Date of filing: 04.09.2003
(51) Int. Cl.: G01N 25/68

(54) **METHOD AND APPARATUS FOR DETERMINING A PHASE TRANSITION OF A SUBSTANCE**
VERFAHREN UND VORRICHTUNG ZUR BESTIMMUNG EINES PHASENÜBERGANGS EINER SUBSTANZ
PROCEDE ET APPAREIL DE DETERMINATION D'UNE TRANSITION DE PHASE D'UNE SUBSTANCE

(30) Priority: 05.09.2002 NL 1021400
(43) Date of publication of application: 01.06.2005
(73) Proprietor: NEDERLANDSE ORGANISATIE VOOR TOEGEPAST-NATUURWETENSCHAPPELIJK ONDERZOEK TNO, 2628 VK Delft (NL)
(72) Inventor: BLOKLAND, Huib, NL-4225 RA Noordeloos (NL)
(74) Representative: Winckels, Johannes Hubertus F.
(86) International application number: PCT/NL2003/000618
(87) International publication number: WO 2004/023124

(56) References cited:
- EP-A- 0 542 582
- US-A- 2 720 107
- US-A- 4 579 462
- US-A- 5 739 416

## Description

The invention relates to a method and an apparatus for determining a phase transition of a substance.

From the US patent publication 4 579 462, an apparatus and method for determining the dew point of a gas are known. The dew point is the temperature at which water vapor condenses from a gas in which water vapor is present. The '462 publication describes that the gas is led along a surface of a thermally conductive body, while the temperature of the body is changed, to form a condensate on the surface of the thermally conductive body. Then, the heat flow along the surface is determined. When the heat flow has a predetermined magnitude, the dew point is reached and the temperature of the surface associated with the dew point is determined.

The '462 publication describes an embodiment with two heat flow meters placed adjoining a heat sink. By means of a cooling element and a heat source, the temperature of the heat flow meters can be varied, so that the dew point can be determined. Here, a first of the heat flow meters is maintained at a slightly higher temperature than a second of the heat flow meters, in that the second heat flow meter is connected to the first heat flow meter via a thermal resistance. Due to the temperature difference, one of the meters reaches the dew point before the other meter. From the composite signal of the two meters, the reaching of the dew point can then be derived. The temperature associated with the dew point is measured using a thermometer on that heat flow meter where the water vapor condenses first.

A disadvantage of the known apparatus and method is that the phase transition and/or the temperature associated with the phase transition cannot be determined sufficiently accurately. This is because, due to the thermal resistance connecting the two meters, the second heat flow meter reacts slowly to changes in the heat flow. Because of this, a rapid change in the heat flow, for instance due to a rapid condensation, is not detected.

It is an object of the invention to remove this disadvantage. For this purpose, the invention provides a method according to claim 1.

A method according to the invention can be used to accurately determine a phase transition and/or the temperature associated with the phase transition, because the rapidity with which the heat flow meter can react is not limited by a thermal resistance outside the heat flow meter.

The invention also relates to an apparatus according to claim 8. Such an apparatus can rapidly react to changes in the heat flow and thus accurately determine the dew point.

It is noted that, from European patent publication 0 542 582 A1, a method and apparatus for determining the dew point are known, which correspond to the method and apparatus known from the abovementioned US publication. Therefore, the method and apparatus known from this '582 publication have the disadvantages associated with the apparatus and method known from '462.

Specific embodiments of the invention are laid down in the dependent claims. Further details, aspects and embodiments of the invention will be discussed hereinafter with reference to the Figures shown in the drawing, in which:
Fig. 1 diagrammatically shows a perspective view of an example of a first embodiment of an apparatus according to the invention;
Fig. 2 shows a first simulation of the development in time of: the temperature of the condensing surfaces, the dew point temperature determined using a method according to the invention and the difference in heat flow between the condensing surfaces upon a sinusoidal variation of the heating of the condensing surface of an apparatus according to the invention;
Fig. 3 shows a second simulation of the development in time of: the temperature of the condensing surfaces, the dew point temperature determined using a method according to the invention, as well as the difference in heat flow between the condensing surfaces during a saw-tooth variation of the heating of the condensing surfaces of an apparatus according to the invention;
Fig. 4 diagrammatically shows a top plan view of a second example of an embodiment of an apparatus;
Fig. 5 diagrammatically shows a side elevational view of a third example of an embodiment of an apparatus according to the invention;
Fig. 6 diagrammatically shows a flow diagram of an example of a method according to the invention.

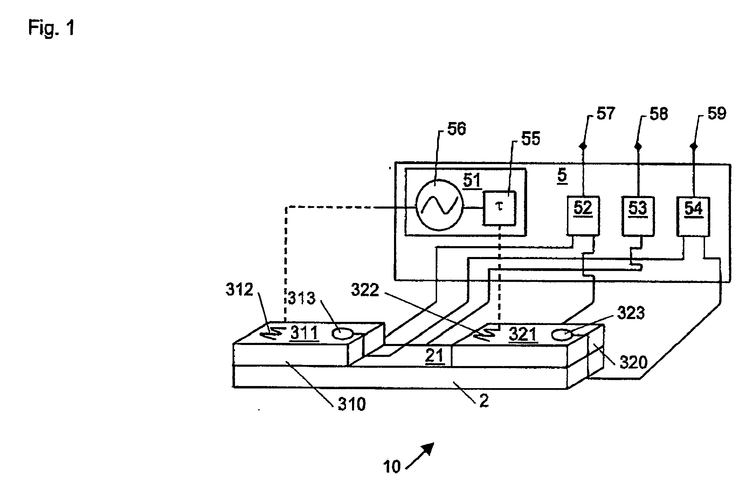

Fig. 1 shows an example of an apparatus according to the invention. The apparatus 1, hereinafter referred to as 'sensor', comprises a cooling element 2. Two heat flow meters 310,320 are in thermal contact with the cooling element 2. In the example shown, the heat flow meters 310,320 are located on a top surface 21 of the cooling element 2. A control circuit 5 is communicatively connected to the heat flow meters 310,320 and the cooling element 2. The apparatus is located in a room filled with a gas of which the dew point is to be determined.

In the example shown, the heat flow meters are identical and the heat flow meters 310,320 each have a condensing surface 311,321. The condensing surfaces are of a thermally well conductive material and are in direct contact with the gas. When the condensing surfaces have a temperature which corresponds to the dew point of the gas or is lower than the dew point, water vapor will condense on the condensing surfaces. Heat is released from the gas due to the condensation of the water vapor. The heat flow from the gas can be detected, so that the moment of reaching the dew point can be determined. On each of the condensing surfaces 311,321, a temperature sensor 313,323 is located which can measure the temperature of the respective surface, so that, by measuring the temperature at or near the moment of reaching the dew point, the dew point temperature can also be determined. The condensing surfaces 311,321 each have an electrical heating element 312,322. The heating elements 312,322 are controlled by the control circuit 5 by means of a communicative connection, shown in dotted lines, with a signal generator 51.

The top surface 21 of cooling element 2 is cooled by the cooling element 2, so that the temperature of the top surface is substantially constant. In the example shown, the temperature of the top surface 21 is maintained below the minimum dew point temperature by the cooling element 2. In the example shown, the cooling element is set such that the contact surface of the heat flow meters 310,320 is maintained at a temperature of 20 degrees Celsius by the cooling element 2. The cooling element 2 is connected to a cooling control device 53 in the control circuit 5. By means of a gate 58, the cooling control device 53 can be set or connected to other electronic components.

It is also possible to use the cooling element to vary the temperature of the top surface, with the heating elements then additionally regulating the variable cooling of the top surface. The cooling element then functions as a rough temperature regulation for the condensing surfaces, which is refined by the heating elements.

The heating elements 312,322 of the condensing surfaces 311,321 are controlled by the control circuit 5. The signal generator 51 comprises an oscillator 56 delivering a sinusoidal signal. A first output of the oscillator 56 is connected to the first heating element 312. A second output of the oscillator 56 is connected to the second heating element 322 via a phase shifter 55. Due to the phase shifter, the second heating 312 is controlled in the same manner as the first element, but phase-shifted.

Due to the phase shift, upon cooling or heating of the surfaces, one of the two condensing surfaces will reach the dew point before the other condensing surface. This will change the difference signal between the measured heat flows so that the dew point can be determined. With a small phase shift, the difference signal is small, but upon reaching the dew point, it will show a relatively large change, so that the dew point can be simply detected.

In the example shown, the power produced by the heating elements is controlled by the control circuit 5, such that the temperatures of the condensing surfaces vary between the minimum and maximum dew point temperature. In the example of Fig. 1, the power which the heating elements 312,322 produce in use is set such that the temperature of the condensing surfaces 311,321 varies between 20 degrees Celsius and 90 degrees Celsius.

In the example in Fig. 1, the heat flow meters are connected to a differential circuit 52 which can determine the difference signal and compare it to a preset property of the difference signal associated with the dew point. For determining the dew point temperature, the temperature sensors 313,323 are connected to a thermal measuring element 54. The thermal circuit 54 can be controlled by the differential circuit, so that, upon reaching the dew point, a signal representing the dew point temperature is automatically delivered to a port 59 connected to the thermal circuit. The differential circuit 52 is also connected to a port 57 for delivering a signal at the moment the dew point is reached. The port 57 can, for instance, be connected to a signaling device for delivering a signal perceptible to humans, so that, upon reaching the dew point, for instance, an operator of a baking process can perceive that the dew point has been reached.

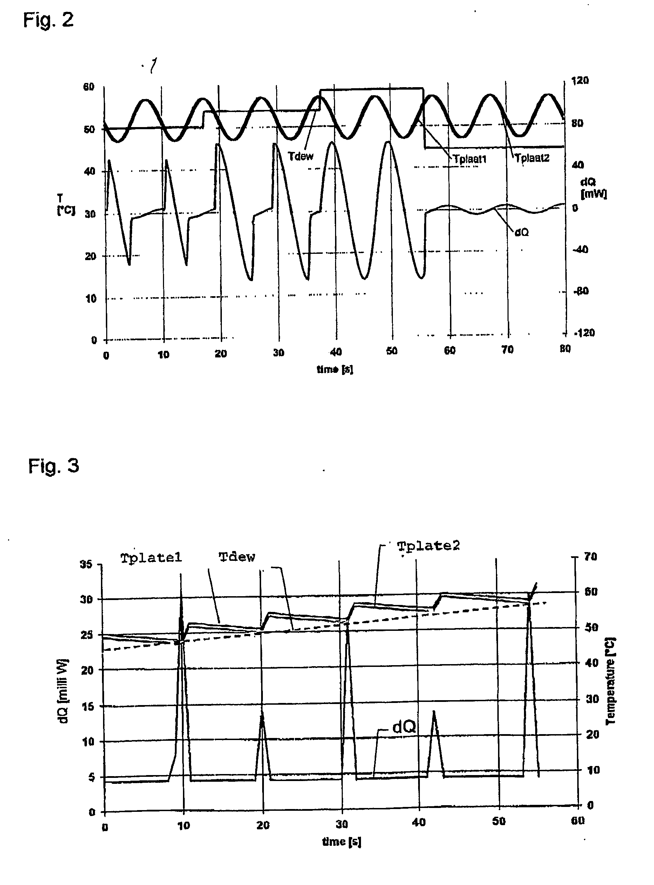

Fig. 2 shows a simulation of the temperatures Tplate1, Tplate2 of the condensing surfaces 311,321, the dew point temperature Tdew and the difference dQ in heat flow between the condensing surfaces with a sinusoidal variation of the heating power of the heating elements 312,322. The temperature of the condensing surfaces also varies sinusoidally with a maximum of 57 degrees and a minimum of 47 degrees Celsius. The dew point temperature Tdew is also shown. The dew point temperature Tdew shows a stepwise increase. Between the points in time 0 and 17 seconds, the dew point temperature is 50 degrees Celsius, between the points in time 17 and 38, it is 54 degrees Celsius, between the points in time 38 and 54 seconds, it is 59 degrees Celsius, and after 54 seconds, it is 44 degrees Celsius.

In the simulation, the sinusoidal variation is such that, in the time interval between the points in time 0 seconds and 38 seconds, the dew point temperature is between the minimum and maximum temperature of the condensing surfaces. In the time interval between 38 seconds and 54 seconds, the dew point temperature is above the maximum temperature of the condensing surfaces, while after 54 seconds, the dew point temperature is below the minimum temperature of the condensing surfaces.

As is shown in Fig. 2, the heat flow difference dQ shows a peaked curve when the dew point temperature is between the minimum and maximum temperature of the surfaces, in other words, upon reaching the dew point temperature, the heat flow difference dQ shows a stepwise change. When the dew point temperature is above the maximum temperature of the surfaces, the heat flow difference dQ shows a sinusoidal curve having a large amplitude, while the heat flow difference is virtually constant, in Fig. 2 virtually zero, when the dew point temperature is below the minimum temperature of the surfaces, and can, for instance as in Fig. 2, show a periodic, sinusoidal curve having a very small amplitude.

With a sinusoidal variation of the heating, it can thus be simply determined if the dew temperature is above, between or below the temperature variation of the condensing surfaces, by determining the form of the difference signal. For instance, by means of a Fourier transformation, it can be examined whether the heat flow difference signal comprises multiple frequency components and consequently the dew point is within the temperature variation, as is the case in the example between the points in time 0 and 38 seconds. When, by contrast, the difference signal substantially comprises only one frequency component, the dew point temperature is outside the temperature variation of the condensing surfaces, as is the case in Fig. 2 between 38 seconds and 80 seconds. When the dew point temperature is outside the temperature variation, by examination of the amplitude of the difference signal, it can be determined whether the dew point temperature is above or below the temperature range.

With a sinusoidal variation, as in Fig. 2, the property of the difference signal associated with the dew point can be set at the presence of sharp peaks or stepwise transitions in the difference signal, such as just before and at the point in time 10 seconds in Fig. 2.

Fig. 3 shows a simulation of the temperature of the condensing surfaces 311,321; the heat flow difference and the dew point temperature as a function of the time with a saw-tooth variation of the heating. Then, the heat flow difference dQ is constant, with a pulse-shaped deflection upon reaching the dew point, such as is shown in the Figure around points in time 10, 20, 30s. With a saw-tooth variation of the heating, the dew point can be simply detected, for instance by a pulse detector with an off-set. The off-set can then be set at the magnitude of the constant component of the heat flow difference; in Fig. 3 this is approximately 4.5 milliWatt.

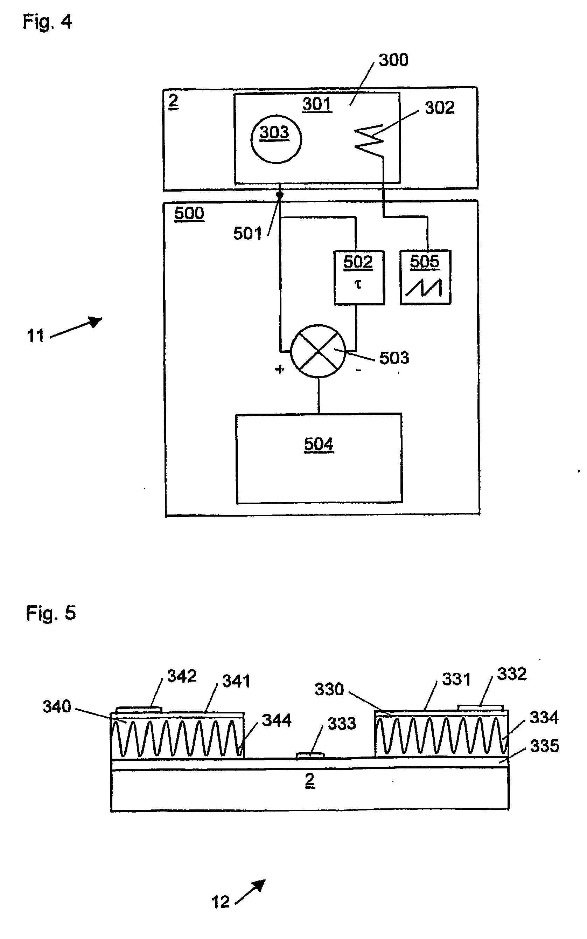

The example of a sensor 11 shown in Fig. 4 has a heat flow meter 300 cooled by a cooling element 2. For this purpose, in the example shown, the heat flow meter 300 is fixed on the top side of the cooling element 2. The heat flow meter 300 has a condensing surface 301 on a top side remote from the cooling element 2, the temperature of which can be measured by a temperature sensor 303. The temperature of the condensing surface can be varied by supplying heat to the surface 301 using an electrical heating 302. The heat flow meter is communicatively connected to a circuit input 501 of a signal-processing circuit 500. By means of this connection, the heat flow meter 300 can transfer a signal representing the heat flow measured to the signal-processing circuit 500. The heating 302 is controlled by a heating regulator 505 in the signal-processing circuit 500 with a saw-tooth signal, so that the power added to the surface 301 also has a saw-tooth variation.

The signal-processing circuit 500 comprises a phase-delaying element 502, an input of which is connected to the circuit input 501. An output of the phase-delaying element 502 is connected to a negative input of a differential circuit 503. A positive input of the differential circuit 503 is directly connected to the circuit input 501. In this manner, the differential circuit 503 determines the difference between the signal from the heat flow meter and a phase-shifted signal. The difference signal is delivered to a detection circuit 504 through an output of the differential circuit 503. In the example shown, the differential circuit can perform a simple subtraction operation, but the difference signal may also be determined in a different manner, for instance by means of a correlation method.

The detection circuit 504 can determine the presence of jumps in the difference signal. As was explained hereinabove, at a phase transition, a jump in the difference signal will occur, so that the phase transition can be detected. The temperature of the condensing surface 301 at the moment of the phase transition can then be determined using the temperature sensor 303, so that the temperature of the phase transition can be measured.

Fig. 5 shows a third example of an embodiment of an apparatus or sensor according to the invention. The sensor 12 comprises a cooling element 2 which is thermally in contact with two heat flow meters 330,340. Between the heat flow meters 330,340 and the cooling element 2, a thermally conductive carrier 335 is present. The thermally conductive carrier 335 can be manufactured from any suitable material, such as for instance aluminum. The heat flow meters 330,340 each have a condensing plate 331,341 on a side remote from the carrier 335, which plate is of a suitable material, such as for instance a metal. The condensing plates 331,341 are both provided with a heating element 332,342. Between the condensing plate 331 and 341 respectively and the carrier 335, each of the heat flow meters 330,340 comprises copper-constantan thermopile tape 334,344 embedded in HT-epoxy. The use of such a thermopile tape in a heat flow meter is known per se from H. Blokland, F. de Graaf, *"Sensor for measuring convective and radiative heat flux",* TEMPMEKO 2001. On the thermally conductive carrier 335, a temperature sensor 333 is present which measures the temperature of the carrier.

Across the thermopile tape 334,344, a voltage drop arises upon a temperature difference between the condensing plate 331 and 342 respectively and the thermally conductive carrier 335. Starting from the electric tension across the thermopile tape, the temperature on the condensing plates 331,341 can be derived by determining the temperature difference between the carrier 335 and the respective condensing plate 331 and 341 respectively and combining this temperature difference with the temperature of the carrier 335.

In the example of Fig. 5, the thermally conductive carrier is designed as an aluminum strip of 10 mm by 20 mm by 3 mm. The condensing plates are of metal, in the example shown of aluminum, but other metals are also possible, such as, for instance, thermally well conductive materials such as copper, gold, silver or the like. The condensing plates have the dimensions of 10 mm by 10 mm by 0.3 mm. The heat flow meters are 6 mm in diameter and 0.5 mm thick.

The cooling element may be of any suitable type. The cooling element may, for instance, be designed as a Peltier element, a conductor for an externally cooled liquid or a melting material having a melting point which is below the dew point temperature to be measured.

The examples of apparatuses according to the invention described hereinabove are particularly suitable for determining the dew point of a gas. In combination with the temperature of the gas, the dew point temperature can be used to determine the relative humidity of the gas. The relative humidity is an important parameter in many industrial processes, such as the baking of pastry or the manufacture of ceramic material. For an optimal progress, the relative humidity then needs to be measured and/or set as well as possible. By means of an apparatus according to the invention, the dew point and/or the dew point temperature can be determined with great precision, so that the relative humidity can also be accurately determined. However, the invention is not limited to determining the dew point, but can also be used for determining phase transitions in other uses, such as for instance the condensation of gases, the evaporation of liquids or the melting or solidifying of materials.

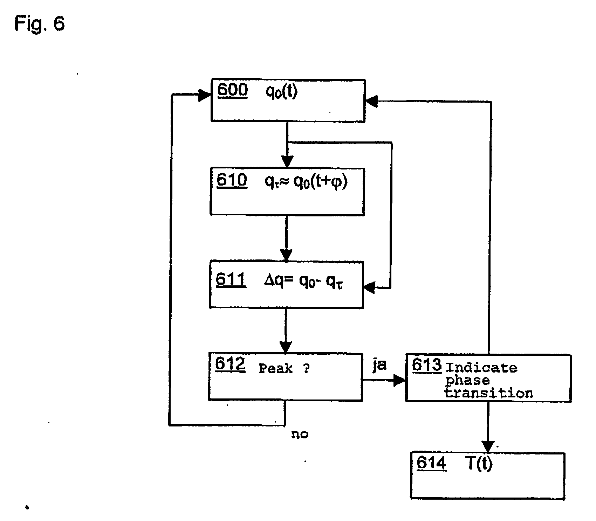

Fig. 6 shows a flow diagram of an example of a method according to the invention. In a first step 600, at a point in time t, the heat flow is measured from the substance of which the phase transition is to be detected. This measurement results in a first measuring signal q₀ (t). In a second step 610, a phase-shifted measuring signal q_{τ} is generated. The phase-shifted measuring signal has a phase difference ϕ compared to the first measuring signal q₀ and is otherwise substantially equal to the first measuring signal. In a third step 611, a difference signal Δq is determined, representing the difference between the first measuring signal q₀ and the phase-shifted measuring signal q_{τ} at the point in time t. In a fourth step 612, the difference signal Δq is tested against a certain criterion, such as for instance, in the example shown, the presence of peaks in the difference signal. Other criteria, such as for instance the magnitude of the difference signal, the period or frequency components of the difference signal or the presence of stepwise or discontinuous transitions can also be used to indicate the phase transition. When the difference signal shows a peak, a phase transition is detected in step 613, after which the temperature at which the phase transition takes place is measured in step 614. After indication of the phase transition in step 613, the method can be repeated by carrying out step 600 again. If no peak is found in the difference signal, no phase transition is detected, and the method can also be repeated, if desired with a changed measuring signal, for instance with a different amplitude or off-set.

The phase difference between the first measuring signal and the phase-shifted signal may have any suitable value. When the phase difference is relatively small, for instance smaller than 1 radial, such as for instance smaller than or equal to a delay of 0.5 seconds given a period of 10 seconds, the relative change in the difference signal is large at a phase transition, and therefore easy to detect. The phase difference can also be such that the signals are virtually in antiphase in relation to each other, for instance a shift of 4.5 seconds given a period of 10 seconds. Then, a phase transition also causes a relative change of the difference signal which is large and therefore easy to detect.

The invention is not limited to the examples described. After reading the foregoing, various modifications will be obvious to a person skilled in the art. It is particularly obvious to design the sensor with multiple heat flow meters. It is also obvious to control the heating elements with other types of signals, such as for instance square waves.

## Claims

1. A method for determining a phase transition of a substance, comprising:
(i) generating (600) a first measuring signal (q₀(t)) by measuring, as a function of time (t), a heat flow from the substance of which the phase transition is to be detected;
(ii) generating (610), as a function of time (t), a second measuring signal;
(iii) determining (611), as a function of time (t), a difference signal (Δq(t)) representing the difference between the first measuring signal (q₀(t)) and the second measuring signal;
(iv) testing (612) the difference signal (Δq(t)) against a criterion; and
(v) detecting (613) the phase transition when the testing (612) reveals that the criterion is met;
**characterized in that**
the second measuring signal is a phase-shifted measuring signal (q_{τ}(t)) which has a phase difference (ϕ) compared to the first measuring signal (q₀(t)) and is otherwise substantially equal to the first measuring signal, and **in that** the criterion against which the difference signal (Δq(t)) is tested is whether the difference signal meets a predetermined condition, such as for instance the presence of peaks, stepwise or discontinuous transitions or pulse-shaped deflections in the difference signal or magnitude, period or frequency components of the difference signal.

2. A method according to claim 1, wherein the generation (600) of the first measuring signal (q₀(t)) comprises:
varying a temperature of a first surface (311, 321; 331, 341);
measuring a heat flow from the substance to the first surface;
and wherein the generation (610) of the phase-shifted signal (q_{τ}(t)) comprises:
varying a temperature of a second surface (311, 321; 331, 341), which varying is phase-shifted in relation to the varying of the temperature of the first surface;
measuring a heat flow from the substance to the second surface.

3. A method according to claim 2, wherein the varying of the temperature of at least one of the said surfaces (311, 321; 331, 341) comprises:
heating up the surface by means of a heating element (312, 322; 332, 342) located near the surface;
cooling down the surface by means of a cooling element (2) thermally connected to the surface and located at a distance from the surface.

4. A method according to claim 3, wherein measuring the heat flow comprises: measuring a heat flow from the surface (311, 321; 331, 341) to the cooling element (2).

5. A method according to claim 3 or 4, wherein the cooling down of the surface (311, 321; 331, 341) comprises:
maintaining at least a part of the cooling element (2) at a constant temperature;
and wherein the heating up of the surface comprises:
varying thermal energy supplied to the surface by the heating element (312, 322; 332, 342); and wherein the cooling down and heating up of the surface are carried out at least partially simultaneously.

6. A method according to any one of the preceding claims, wherein the phase transition is the transition from the gaseous phase to the liquid phase of the substance.

7. A method according to any one of the preceding claims, wherein the method is used for determining the dew point of a gas.

8. An apparatus for determining a phase transition of a substance, comprising:
- a heat flow meter (310, 320; 300; 330, 340) arranged for measuring (600), as a function of time (t), a heat flow from the substance of which the phase transition is to be detected, the heat flow meter comprising a meter output for delivering a first measuring signal (q₀(t)) constituting a measure for the value of the measured heat flow;
- signal generating means (51; 502) arranged for generating (610), as a function of time (t), a second measuring signal;
- a difference-determining element (52; 503) for determining, as a function of time (t), a difference signal (Δq(t)) representing the difference between the first measuring signal (q₀(t)) and the second measuring signal;
- testing means (52; 504) for testing (612) the difference signal (Δq(t)) against a criterion; and
- detecting means (52, 57; 504) for detecting (613) the phase transition when the testing (612) reveals that the criterion is met;
**characterized in that**
the second measuring signal is a phase-shifted measuring signal (q_{τ}(t)) which has a phase difference (ϕ) compared to the first measuring signal (q₀(t)) and is otherwise substantially equal to the first measuring signal, and **in that** the criterion against which the difference signal (Δq(t)) is tested is whether the difference signal meets a predetermined condition, such as for instance the presence of peaks, stepwise or discontinuous transitions or pulse-shaped deflections in the difference signal or magnitude, period or frequency components of the difference signal.

9. An apparatus according to claim 8, comprising:
a first heating element (312, 322; 332, 342);
a first heat flow meter (310, 320; 330, 340) thermally connected to the first heating element,
the signal generating means (51) for generating the phase-shifted measuring signal (q_{τ}(t)) comprising:
a second heat flow meter (310, 320; 330, 340) and
a second heating element (312, 322; 332, 342) thermally connected to the second heat flow meter, which first and second heating element are connected to a control circuit (51) which, in use, controls the second heating element in a phase-shifted manner in relation to the first heating element.

10. An apparatus according to claim 8, wherein the signal generating means for generating the phase-shifted measuring signal (q_{τ}(t)) comprise an electronic circuit (500), which electronic circuit at least comprises:
a phase-shifting element (502) connected to an output of the heat flow meter (300);
a combining element (503) having
a first input connected to an output of the phase-shifting element (502) and
a second input connected to the output of the heat flow meter (300), an output to which a difference signal of signals presented to the inputs is provided, wherein one of the inputs is a negative input and another of the inputs is a positive input;
and which circuit (500) further comprises:
a detection element (504) connected to the output of the combining element (503) for the performing of said testing (612).

## Patentansprüche

1. Verfahren zum Bestimmen eines Phasenübergangs einer Substanz, bei dem:
(i) ein erstes Messsignal (q₀(t)) erzeugt wird (600), indem ein Wärmefluss von der Substanz, deren Phasenübergang erfasst soll, als Funktion der Zeit gemessen wird;
(ii) ein zweites Messignal als Funktion der Zeit (t) erzeugt wird (610);
(iii) ein Differenzsignal (Δq(t)) als Funktion der Zeit (t) bestimmt wird (611), das die Differenz zwischen dem ersten Messsignal (q₀(t)) und dem zweiten Messsignal repräsentiert;
(iv) das Differenzsignal (Δq(t)) auf ein Kriterium hin getestet wird (612); und
(v) der Phasenübergang festgestellt wird (613), wenn das Testen (612) ergibt, dass das Kriterium erfüllt ist;
**dadurch gekennzeichnet, dass**
das zweite Messsignal ein phasenverschobenes Messsignal (q_{τ}(t)) ist, das eine Phasendifferenz (ϕ) im Vergleich zu dem ersten Messsignal (q₀(t)) hat und ansonsten im Wesentlichen dem ersten Messsignal gleicht, und dass das Kriterium, auf das das Differenzsignal (Δq(t)) getestet wird, darin besteht, ob das Differenzsignal eine vorgegebene Bedingung erfüllt, wie etwa das Vorhandensein von Spitzen, schrittweise oder unstetige Übergänge oder pulsförmige Ausschläge in dem Differenzsignal oder der Amplitude, der Periode oder der Frequenzkomponenten des Differenzsignals.

2. Verfahren nach Anspruch 1, wobei bei der Erzeugung (600) des ersten Messsignals (q₀(t))
eine Temperatur einer ersten Oberfläche (311, 321; 331, 341) variiert wird;
ein Wärmefluss von der Substanz auf die erste Oberfläche gemessen wird;
und wobei bei der Erzeugung (610) des phasenverschobenen Signals (q_{τ} (t)) :
Eine Temperatur einer zweiten Oberfläche (311, 321; 331, 341) variiert wird, wobei diese Variation phasenverschoben ist in Bezug auf die Variation der Temperatur der ersten Oberfläche;
ein Wärmefluss von der Substanz zu der zweiten Oberfläche gemessen wird.

3. Verfahren nach Anspruch 2, wobei bei der Variation der Temperatur wenigstens einer der Oberflächen (311, 321; 331, 341)
die Oberfläche mittels eines Heizelements (312, 322; 332, 342), das nahe an der Oberfläche angeordnet ist, aufgeheizt wird;
die Oberfläche mittels eines Kühlelements (2) abgekühlt wird, das thermisch mit der Oberfläche verbunden ist und in einem Abstand zu der Oberfläche angeordnet ist.

4. Verfahren nach Anspruch 3, wobei die Messung des Wärmeflusses die Messung eines Wärmeflusses von der Oberfläche (311, 321; 331, 341) zu dem Kühlelement (2) umfasst.

5. Verfahren nach Anspruch 3 oder 4, wobei beim Abkühlen der Oberfläche (311, 321; 331, 341)
wenigstens ein Teil des Kühlelements (2) auf einer konstanten Temperatur gehalten wird;
und wobei bei dem Aufheizen der Oberfläche
die durch das Heizelement (321, 322; 332, 342) der Oberfläche zugeführte thermische Energie variiert wird; und
wobei das Abkühlen und Aufheizen der Oberfläche wenigstens teilweise simultan ausgeführt werden.

6. Verfahren nach einem der vorhergehenden Ansprüche, wobei der Phasenübergang der Phasenübergang von der Gasphase in die flüssige Phase der Substanz ist.

7. Verfahren nach einem der vorhergehenden Ansprüche, wobei das Verfahren zum Bestimmen des Taupunktes eines Gases angewendet wird.

8. Vorrichtung zum Bestimmen eines Phasenübergangs einer Substanz mit:
Einem Wärmeflussmessgerät (310, 320; 300; 330, 340), das zum Messen eines Wärmeflusses von der Substanz, deren Phasenübergang erfasst werden soll, als Funktion der Zeit (t) ausgestaltet ist, wobei das Wärmeflussmessgerät einen Messgerätausgang aufweist, um ein erstes Messsignal (q₀(t)) zu liefern, das ein Maß für den Wert des gemessenen Wärmeflusses bildet;
einer Signalerzeugungseinrichtung (51; 502), die zum Erzeugen (610) eines zweiten Messsignals als Funktion der Zeit (t) ausgestaltet ist;
einem Differenzbestimmungselement (52; 503) zum Bestimmen eines Differenzsignals (Δq(t)) als Funktion der Zeit (t), das die Differenz zwischen dem ersten Messsignal (q₀(t)) und dem zweiten Messsignal repräsentiert;
einer Testeinrichtung (52; 504) zum Testen (612) des Differenzsignals (Δq(t)) auf ein Kriterium; und
einer Erfassungseinrichtung (52, 57; 504) zum Erfassen (613) des Phasenübergangs, wenn das Testen (612) ergibt, dass das Kriterium erfüllt ist;
**dadurch gekennzeichnet, dass**
das zweite Messsignal ein phasenverschobenes Messsignal (q_{τ}(t)) ist, das eine Phasendifferenz (ϕ) im Vergleich zum ersten Messsignal (q₀(t)) hat und ansonsten im Wesentlichen dem ersten Messsignal gleicht, und dass das Kriterium, auf das das Differenzsignal (Δq(t)) getestet wird, darin besteht, ob das Differenzsignal eine vorgegebene Bedingung erfüllt, wie etwa beispielsweise das Vorhandensein von Spitzen, schrittweisen und unstetigen Übergängen oder pulsförmigen Ausschlägen in dem Differenzsignal oder der Amplitude, der Periode oder den Frequenzkomponenten des Differenzsignals.

9. Vorrichtung nach Anspruch 8 mit:
Einem ersten Heizelement (312, 322; 332, 342);
einem ersten Wärmeflussmessgerät (310, 320; 330, 340), das thermisch mit dem ersten Heizelement verbunden ist,
wobei die Signalerzeugungseinrichtung (51) zum Erzeugen des phasenverschobenen Messsignals (q_{τ}(t)) aufweist:
Ein zweites Wärmeflussmessgerät (310, 320; 330, 340) und ein zweites Heizelement (312, 322; 332, 342), das thermisch mit dem zweiten Wärmeflussmessgerät verbunden ist,
wobei das erste und das zweite Heizelement mit einer Steuerschaltung (51) verbunden sind, die im Betrieb das zweite Heizelement in phasenverschobener Weise in Bezug auf das erste Heizelement steuert.

10. Vorrichtung nach Anspruch 8, wobei die Signalerzeugungseinrichtung zum Erzeugen des phasenverschobenen Messsignals (q_{τ}(t)) eine elektronische Schaltung (500) umfasst, die wenigstens aufweist:
Ein Phasenverschiebungselement (502), das mit dem Ausgang des Wärmeflussmessgerätes (300) verbunden ist;
ein Kombinierelement (503) mit
einem ersten Eingang, der mit einem Ausgang des Phasenverschiebungselements (502) verbunden ist, und
einem zweiten Eingang, der mit dem Ausgang des Wärmeflussmessgerätes (300) verbunden ist,
einem Ausgang, an dem ein Differenzsignal der an die Eingänge gelieferten Signale bereitgestellt wird, wobei einer der Eingänge ein negativer Eingang und der andere der Eingänge ein positiver Eingang ist;
und wobei die Schaltung (500) weiter aufweist:
Ein Detektorelement (504), das mit dem Ausgang des Kombinierelements (503) verbunden ist, um das Testen (612) durchzuführen.

## Revendications

1. Procédé pour déterminer une transition de phase d'une substance, comportant les étapes consistant à :
(i) générer (600) un premier signal de mesure (q₀(t)) en mesurant, en fonction du temps (t), un flux de chaleur provenant de la surface dont la transition de phase est à détecter,
(ii) générer (610), en fonction du temps (t), un second signal de mesure,
(iii) déterminer (611), en fonction du temps (t), un signal différentiel (Δq(t)) représentant la différence entre le premier signal de mesure (q₀(t)) et le second signal de mesure,
(iv) tester (612) le signal différentiel (Δq(t)) en fonction d'un critère, et
(v) détecter (613) la transition de phase lorsque le test (612) révèle que le critère est satisfait,
**caractérisé en ce que**
le second signal de mesure est un signal de mesure déphasé (q_{τ}(t)) qui a une différence de phase (ϕ) par comparaison au premier signal de mesure (q₀(t)) et est sinon essentiellement égal au premier signal de mesure, et **en ce que** le critère en fonction duquel le signal différentiel (Δq(t)) est testé est le fait que le signal différentiel satisfait ou non à une condition prédéterminée, telle que par exemple la présence de pics, transitions échelonnées ou discontinues ou déflexions en forme d'impulsion dans le signal différentiel ou des composantes de grandeur, de période ou de fréquence du signal différentiel.

2. Procédé selon la revendication 1, dans lequel la génération (600) du premier signal de mesure (q₀(t)) comporte les étapes consistant à :
faire varier une température d'une première surface (311, 321 ; 331, 341),
mesurer un flux de chaleur allant de la substance à la première surface,
et dans lequel la génération (610) du signal déphasé (q_{τ}(t)) comporte les étapes consistant à :
faire varier une température d'une seconde surface (311, 321 ; 331, 341), laquelle variation est déphasée par rapport à la variation de la température de la première surface,
mesurer un flux de chaleur allant de la substance à la seconde surface.

3. Procédé selon la revendication 2, dans lequel la variation de la température d'au moins une desdites surfaces (311, 321 ; 331, 341) comporte :
l'élévation de température de la surface par l'intermédiaire d'un élément chauffant (312, 322 ; 332, 342) situé à proximité de la surface,
le refroidissement de la surface par l'intermédiaire d'un élément refroidissant (2) connecté thermiquement à la surface et situé à une distance de la surface.

4. Procédé selon la revendication 3, dans lequel la mesure du flux de chaleur comporte : la mesure d'un flux de chaleur allant de la surface (311, 321 ; 331, 341) à l'élément refroidissant (2).

5. Procédé selon la revendication 3 ou 4, dans lequel le refroidissement de la surface (311, 321 ; 331, 341) comporte :
le maintien d'au moins une partie de l'élément refroidissant (2) à une température constante,
et dans lequel l'élévation de température de la surface comporte :
la variation de l'énergie thermique délivrée dans la surface par l'élément chauffant (312, 322 ; 332, 342), et dans lequel le refroidissement et l'élévation de température de la surface sont effectués au moins partiellement simultanément.

6. Procédé selon l'une quelconque des revendications précédentes, dans lequel la transition de phase est la transition de la phase gazeuse en la phase liquide de la substance.

7. Procédé selon l'une quelconque des revendications précédentes, dans lequel le procédé est utilisé pour déterminer le point de rosée d'un gaz.

8. Appareil pour déterminer une transition de phase d'une substance, comportant :
- un dispositif de mesure de flux de chaleur (310, 320 ; 300 ; 330, 340) conçu pour mesurer (600), en fonction du temps (t), un flux de chaleur provenant de la surface dont la transition de phase est à détecter, le dispositif de mesure de flux de chaleur comportant une sortie de dispositif de mesure pour délivrer un premier signal de mesure (q₀(t)) constituant une mesure pour la valeur du flux de chaleur mesuré,
- des moyens de génération de signal (51 ; 502) conçus pour générer (610), en fonction du temps (t), un second signal de mesure,
- un élément de détermination de différence (52 ; 503) pour déterminer, en fonction du temps (t), un signal différentiel (Δq(t)) représentant la différence entre le premier signal de mesure (q₀(t)) et le second signal de mesure,
- des moyens de test (52, 504) pour tester (612) le signal différentiel (Δq(t)) en fonction d'un critère, et
- des moyens de détection (52, 57 ; 504) pour détecter (613) la transition de phase lorsque le test (612) révèle que le critère est satisfait,
**caractérisé en ce que**
le second signal de mesure est un signal de mesure déphasé (q_{τ}(t)) qui a une différence de phase (ϕ) par comparaison au premier signal de mesure (q₀(t)) et est sinon essentiellement égal au premier signal de mesure, et **en ce que** le critère en fonction duquel le signal différentiel (Δq(t)) est testé est le fait que le signal différentiel satisfait ou non à une condition prédéterminée, telle que par exemple la présence de pics, transitions échelonnées ou discontinues ou déflexions en forme d'impulsion du signal différentiel ou des composantes de grandeur, de période ou de fréquence du signal différentiel.

9. Appareil selon la revendication 8, comportant :
un premier élément chauffant (312, 322 ; 332, 342),
un premier dispositif de mesure de flux de chaleur (310, 320 ; 330, 340) connecté thermiquement au premier élément chauffant,
les moyens de génération de signal (51) pour générer le signal de mesure déphasé (q_{τ}(t)) comportant :
un second dispositif de mesure de flux de chaleur (310, 320 ; 330, 340) et
un second élément chauffant (312, 322 ; 332, 342) connecté thermiquement au second dispositif de mesure de flux de chaleur, lesquels premier et second éléments chauffants sont connectés à un circuit de commande (51) qui, en utilisation, commande le second élément chauffant d'une manière déphasée par rapport au premier élément chauffant.

10. Appareil selon la revendication 8, dans lequel les moyens de génération de signal pour générer le signal de mesure déphasé (q_{τ}(t)) comportent un circuit électronique (500), lequel circuit électronique comporte au moins :
un élément à déphasage (502) connecté à une sortie du dispositif de mesure de flux de chaleur (300),
un élément de combinaison (503) ayant
une première entrée connectée à une sortie de l'élément à déphasage (502) et
une seconde entrée connectée à la sortie du dispositif de mesure de flux de chaleur (300),
une sortie dans laquelle un signal différentiel de signaux présentés à l'entrée est fournie, une des entrées étant une entrée négative et l'autre des entrées étant une entrée positive,
et lequel circuit (500) comporte de plus :
un élément de détection (504) connecté à la sortie de l'élément de combinaison (503) pour effectuer ledit test (612).
